# EUROPEAN PATENT SPECIFICATION

(11) **EP 0 501 672 B1**
(45) Date of publication and mention of the grant of the patent: **29.01.1997**
(21) Application number: 92301382.5
(22) Date of filing: 19.02.1992
(51) Int. Cl.: C08F 4/78, C08F 10/00

(54) **Polymerization catalyst and process**
Katalysator für Polymerisation und Verfahren
Catalyseur de polymérisation et procédé

(30) Priority: 01.03.1991 GB 9104363; 01.03.1991 GB 9104364
(43) Date of publication of application: 02.09.1992
(73) Proprietor: BP Chemicals Limited, London EC2M 7BA (GB)
(72) Inventor: Dawkins, Gordon Michael, F-62410 Wingles (FR)
(74) Representative: Wilson, Michael John

(56) References cited:
- EP-A- 0 255 296
- EP-A- 0 416 784
- US-A- 4 376 722
- US-A- 4 547 479
- US-A- 4 690 990
- US-A- 4 806 513

## Description

The present invention relates to an olefin polymerisation catalyst and a process for producing polyolefins using the catalyst.

The use of mononuclear chromium complexes for the polymerisation of olefins is known. For example, British Patent Specification 1253063 discloses a process for the polymerisation of ethylene comprising contacting ethylene, optionally in the presence of hydrogen, with a catalytic amount of bis(cyclopentadienyl) chromium (II) adsorbed on an inorganic oxide at a temperature and pressure sufficient to initiate the polymerisation reaction. US Patent 3806500 discloses a process for polymerising ethylene with a catalyst comprising a pi-bonded chromium compound (e.g. bis(cyclopentadienyl) chromium (II)) deposited on an activated support which catalyst is thermally aged before contacting with the ethylene by heating at a temperature of about 135 to 900°C in an inert atmosphere for a period of time sufficient to allow for the removal of at least some of the ligands from the chromium compound. US Patent 3844975 discloses the homopolymerisation of ethylene or the copolymerisation of ethylene with other alpha-olefins using as a catalyst cyclopentadienyl chromium tricarbonyl hydride supported on an activated silica and/or alumina support, the catalyst being thermally aged in an inert atmosphere prior to contact with the monomer(s). US Patents 3123571 and 3157712 disclose the use of bis (arene) chromium compounds on a silica and/or alumina support as olefin polymerisation catalysts. We have found that catalysts based. on such chromium compounds supported on alumina have very poor catalytic activity.

Zirconium based catalysts eg zirconium tetra benzyl supported on alumina are described in GB Patent 1314828 and US patents 3840508 and 4017525.

Titanium based catalysts e.g. titanium tetra benzyl supported on alumina are described in GB Patent 1314828. It is known to obtain olefin polymers with a broad distribution of molecular weights by a cascade process involving 2 successive polymerisation steps, but these processes have high capital and running costs and are difficult to control.

US 4806513 describes the use of surface silicated alumina as a support for chromium olefin polymerisation catalysts. Catalyst mixtures may be prepared using a chromium component supported on the alumina together with a conventional catalyst component eg chromium, vanadium, titanium or zirconium supported on silica, alumina, etc.

It has now been found that combinations of certain chromium complexes and certain titanium, zirconium or hafnium complexes when supported on an inorganic oxide support (or phosphate derivative thereof, can be used as a catalyst for the polymerization of olefins, particularly the homopolymerization of ethylene but also for copolymerization of ethylene with one or more C₃ to C₈ alpha-olefins. Unexpectedly, the supported catalyst can be used to produce polymers having relatively broad molecular weight distributions, which can be bimodal and asymmetric, e.g. with a high molecular weight tail. The catalyst activity of the Ti, Zr or Hf can be maintained at a useful level in spite of the presence of the Cr compound of poor activity. Furthermore, the catalyst can have a relatively high activity without the need for thermal activation of the supported complexes. The molecular weight and molecular weight distribution of the polymer can be adjusted easily by varying the proportion of Cr to the Ti, Zr or Hf in the catalyst. The catalyst can be used to produce polymers having a broad molecular weight distribution with a relatively high molecular weight which polymers generally have good extrusion properties in that they have relatively low viscosities at high shear rates. They may also have relatively high stress crack resistance. Such polymers are consequently particularly suitable for applications such as the production of blow moulded articles, pipe and tough film. In particular, the catalyst according to the present invention can be used to produce high density polyethylene having a molecular weight distribution (M_{w}/Mₙ) in the range 5 to 50, preferably in the range 7 to 40 most preferably 10-28.

According to the present invention an olefin polymerisation catalyst is obtainable by depositing on a dry inorganic oxide support having surface hydroxyl groups, (or phosphate derivative therof)
(1) at least one chromium complex either of formula
   (i)

      R Cr - Lₓ

      wherein R is a pentadienyl or cyclopentadienyl group, each of which can be unsubstituted or substituted with 1-5 alkyl groups, each of 1-6 carbon atoms, x is 1-3 usually 1 or 2, depending on the coordination sites present on the chromium and each L is a hydrocarbyl ligand which is sufficiently reactive to enable the complex to react with the inorganic support eg oxide without thermal activation,
   or (ii) a bis arene chromium compound preferably having the formula

      R¹Cr R²

      wherein each of R¹ and R², which are the same or different, represents an aromatic hydrocarbon molecule preferably a benzene, naphthalene or anthracene molecule, each of which may be substituted with 1-4 alkyl groups each of 1-6 carbon atoms; and
   (2) a metal complex of formula MR³R⁴R⁵R⁶ wherein M is Ti, Zr or Hf, and each of R³, R⁴, R⁵ and R⁶ which are the same or different, represents a group of 4-20 carbon atoms of the formula (A) CH₂X(R⁷R⁸R⁹), wherein X is carbon, silicon or germanium, and each of R⁷, R⁸ and R⁹ is the same or different and represents a hydrocarbyl group that may be alkyl, or aryl or a substituted aryl, or (B) CH₂Ar wherein Ar represents an aromatic group or substituted aromatic group, and when M is Zr or Hf, each of R³, R⁴, R⁵ and R⁶ which are the same or different may also represent an allyl group, or said metal complex is of formula Ti R¹¹ R¹², wherein each of R¹¹ and R¹², which are the same or different, represents an acyclic dienyl group eg of 6-12 carbon atoms.

The present invention also provides a process for making said catalyst which comprises depositing on said inorganic oxide (or phosphate derivative thereof) said complexes (1) and (2).

In the chromium complex (1), the group R may be a pentadienyl or cyclopentadienyl group substituted by 1-5 especially 1 or 2, alkyl groups, especially methyl, ethyl, isopropyl or n-propyl groups; examples of such groups are mono or di methyl cyclopentadienyl groups, and pentamethyl cyclopentadienyl groups. R is preferably a cyclopentadienyl group.

The chromium complex (i) comprises at least one hydrocarbyl ligand L which is sufficiently reactive or labile to enable the complex to react with the inorganic oxide (or phosphate thereof) especially hydroxyl groups therein, without thermal activation. Particularly, the complex is able to react with the inorganic support at a temperature lower than 100°C and higher than about -30°C, preferably at a temperature from -20°C to 50°C, e.g. at ambient temperature (20°C), in an inert atmosphere. If the complex comprising such a hydrocarbyl ligand L is not sufficiently labile or reactive with the inorganic support, the catalyst thus obtained without thermal activation tends to have a lower activity in olefin polymerisation, and thermal activation will then be needed.

More particularly, a suitable reactive hydrocarbyl ligand L may be a hydrocarbyl ligand obtained by removal of hydrogen from a molecule of formula LH which is an unsaturated hydrocarbon with a linear backbone of 3 to 6 carbon atoms, or an alkyl substituted derivative thereof with one to three alkyl groups each of 1 to 6 carbon atoms. The unsaturated hydrocarbon LH may be a cyclic or acyclic conjugated or a non-conjugated diene hydrocarbon, such as cyclopentadiene, pentadiene-1,3 or pentadiene-1,4. Preferably LH is an unsaturated hydrocarbon of 3 carbon atoms, or, especially in the case when M is Ti, LH is an unsaturated hydrocarbon with a linear chain of 5 carbon atoms.

Suitable reactive hydrocarbyl ligands include, for example:
(a) cyclopentadienyl
(b) cyclopentadienyl substituted with one or two alkyl groups, each of which has 1-3 carbons such as methyl, ethyl, isopropyl or n-propyl
(c) pentadienyl
(d) pentadienyl substituted with at least one hydrocarbyl group containing 1 to 6 carbon atoms, preferably substituted with 1 to 3 groups, each of which is methyl, ethyl or n-propyl such as 2, 4-dimethyl pentadienyl and 2-methylpentadienyl and
(e) allyl
(f) allyl substituted with at least one hydrocarbyl group each containing 1 to 6 carbon atoms, preferably substituted with 1 to 3 groups each of which is methyl, ethyl, isopropyl or n-propyl.

The preferred reactive hydrocarbyl ligands L are:
cyclopentadienyl, allyl, pentadienyl, 2,4-dimethyl-pentadienyl and 2-methyl-pentadienyl.

Preferred chromium compounds of formula (i) are bis cyclopentadienyl chromium, (pentamethyl cyclopentadienyl) (2-methyl-1,4-pentadienyl) chromium (II), (pentamethyl cyclopentadienyl) (2,4-dimethyl pentadienyl) chromium (II), (pentamethyl cyclopentadienyl) (cyclopentadienyl) chromium II, (pentamethyl cyclopentadienyl) allyl chromium II.

The chromium complex (1) may also be a bis arene chromium compound, preferably having the formula (ii) R¹CrR², wherein each of R¹ and R², which may be the same or different, preferably represents benzene or an alkyl benzene with 1-4 alkyl groups, eg 1 or 3 alkyl groups, each of 1-6 carbons such as methyl, ethyl, n-propyl or isopropyl. Examples of such alkyl benzenes are toluene, xylene, cumene, durene. Examples of the chromium bis arene complexes are chromium bis xylene, chromium bis cumene, chromium bis durene and chromium bis naphthalene. Mixtures of the chromium complexes (i) and (ii) may be used eg in relative proportions of 1:10 to 10:1.

The metal complex (2) is an organometallic compound and is usually a metal hydrocarbyl complex. Groups R⁷, R⁸, R⁹ are hydrocarbyl groups, such as alkyl eg of 1-6 carbons such as methyl or ethyl, aryl or substituted aryl, wherein any substituent is inert eg fluorine, and in particular are of 6-19 carbons such as aromatic hydrocarbyl, e.g. phenyl, tolyl or xylyl. Preferably at least one of R⁷-R⁹ is alkyl especially methyl and at least one of R⁷-R⁹ is aryl or substituted aryl especially phenyl. The Ar group represents an optionally substituted aromatic group wherein any substituent is inert eg fluorine, or alkyl of 1-4 carbons, especially a hydrocarbyl group e.g. of 6-19 carbons such as phenyl, tolyl or xylyl.

The metal complex (2) may contain Zr and/or Hf and be of formula M R³R⁴R⁵R⁶ as defined above. Preferred metal complexes (2) are zirconium tetraallyl and zirconium tetra organic compounds wherein the organic group is one of the above groups R³, R⁴, R⁵ and R⁶ which contains an aromatic group, and their hafnium analogues. Particularly preferred complexes are zirconium tetrabenzyl and zirconium tetraneophyl which has the formula Zr[CH₂C(CH₃)₂C₆H₅]₄. Mixtures of metal complexes (2) may be used including mixtures of Ti with Zr and Hf compounds or mixtures of Zr and Hf compounds eg in weight ratios of 1:10 to 10:1. A preferred metal complex (2) is a zirconium complex.

The titanium hydrocarbyl complex (2) is preferably of formula Ti R³R⁴R⁵R⁶ but may also be of formula Ti R¹¹ R¹², wherein each of R¹¹ and R¹² is an acyclic dienyl eg of 6-12 carbons, preferably a group within the definition of L above especially 2,4-dimethyl pentadienyl. Preferred titanium complexes (2) are titanium tetra organic compounds wherein the organic group is one of the above groups R³, R⁴, R⁵ and R⁶ which contains an aromatic group, such as titanium tetrabenzyl, and also titanium bis(alkadienyl) compounds such as bis(2,4-dimethyl pentadienyl). Mixtures of these two types of Ti compounds may be used eg in weight ratios of 1:10 to 10:1.

The chromium, titanium zirconium and hafnium complexes are known compounds and can be made by known methods eg as described in the above mentioned British and American Patents the disclosures of which are hereby incorporated by reference. Novel complexes within the above general formula may be made by methods analoguous to the known methods. Examples of processes for making the chromium complexes are reaction of chromous chloride with alkali metal known methods. Examples of processes for making the chromium complexes are reaction of chromous chloride with alkali metal complexes of the RH and LH compounds, especially in an organic solvent such as a hydrocarbon liquid. The titanium zirconium and hafnium complexes may generally be made by reaction of the metal chlorides with organometallic derivatives of the R³H, R⁴H, R⁵H and R⁶H compounds, or R¹¹ H or R¹² H compounds (in the case of titanium complexes).

The weight percentages of chromium (as Cr) and metal (as M) on the support are usually in the range 0.1-10% for example 0.5-5% or 1-3%. When the metal M is zirconium the preferred percentage of Zr on the support is 0.3-15%, more preferably 1-8%, for example 2-5% by weight. The weight percentages of chromium (as Cr) and titanium (as Ti) on the support are usually 0.1-10% such as 0.1-5%, 0.2-5% or 0.5-2%, and 0.1-15% such as 0.2-8% or 0.5-5% respectively.

The support is an inorganic oxide (or phosphate derivative thereof) and is usually derived from a 3 or 4 valent element, preferably of Group 3A, 4A or 4B of the Periodic Table, said element being for example aluminium, silicon, titanium zirconium or thorium or mixtures thereof; the support preferably comprises an inorganic oxide comprising aluminium (or phosphate derivative). It has surface hydroxyl groups bonded to said element which is preferably aluminium, and also to phosphorus in the case of phosphated aluminas. The support preferably has a surface with at least a majority of alumina and in particular the support itself preferably contains at least 80% (by weight) of alumina. Examples of suitable supports are alpha, beta or gamma alumina, silica, alumina coated silicas with a high surface level of alumina and aluminium phosphate eg with an P:Al ratio of 0.5:1 to 3:1 especially 0.7:1 to 1.5:1 or phosphated alumina (eg the reaction product of alumina and a methanolic solution of phosphoric acid followed by drying). In relation to the phosphated aluminas, the P:Al atom ratio may be 0.001-0.5:1 eg 0.01-0.3:1 preferably 0.02 - 0.2:1 or 0.07-0.25:1.

Gamma alumina and its phosphated derivatives are preferred.

The particle size of the inorganic support is usually between 50 and 300 micrometres. The support usually has a relatively high surface area, preferably greater than 20m²g⁻¹, more preferably from 50 to 1000 m²g⁻¹ such as 200-500 m²g⁻¹. The pore volume is usually 0.1-10 ml/g such as 0.5-5 ml/g.

The chromium and other metal complexes are sensitive to moisture and so the support used to support them should be substantially anhydrous. The support can be dried simply by heating it in a dry, inert atmosphere. The drying may be carried out at any temperature up to the temperature at which the support begins to sinter for a period of time which is at least sufficient to remove the physically adsorbed water and preferably to reduce but not eliminate their hydroxyl contents. Typically, the drying may be carried out at a temperature of from 200 to 1000°C for a period of from 0.1 to 36 hours. Preferably, the temperature used is at least 300°C, more preferably at least 500°C such as 500-700°C and especially 520-680°C or 570-670°C, and usually for a time of 0.1-24 hrs especially 0.5-6hr. A suitable inert atmosphere can be provided, for example by carrying out the heating under a blanket of an inert gas such as nitrogen or argon. Preferably, the inert gas is passed through the inorganic support during the drying to assist in displacing the adsorbed and eliminated water.

The type and grade of inorganic support used and the temperature at which the inorganic support is dried may have an effect on the relative productivity of the catalyst system and on the molecular weight distribution and melt index of the polymer produced.

The chromium complex and the other metal complex may be deposited on the dry inorganic support using known techniques for the preparation of supported catalysts but with care taken not to expose the impregnated support to moisture or to an oxidizing atmosphere, such as oxygen or air or moist inert gas. For example, a slurry technique can be used in which the inorganic support is contacted with a solution of the complex under conditions which exclude air and water. The slurry can be stirred for a period of time sufficient to achieve good adsorption of the complex on the inorganic support e.g. up to about 4 hours. Any suitable dry solvent may be used such as for example petroleum ether (especially for Ti compounds or other aliphatic hydrocarbon or aromatic hydrocarbon such as toluene or xylene or an ether eg a dialkyl ether such as diethyl ether (the aromatic hydrocarbon and dialkyl ether being, especially for Zr and Hf compounds). The chromium and other metal complex may be deposited simultaneously or consecutively in either order but very advantageously the chromium complex is deposited first and the titanium one afterwards as this order tends to reduce production of oligomer by-products.

The supported catalyst may be used in the form of a slurry or paste. However, the solvent is preferably removed, e.g. by filtration or evaporation in a dry, inert atmosphere to produce a dry free-flowing powder.

Direct vapour deposition may also be used in some cases to deposit the chromium or other metal complex on the inorganic support. This may conveniently be carried out by blending the complex and the inorganic support in a dry, inert atmosphere and then reducing the pressure to cause the complex to sublime and adsorb onto the inorganic support.

The catalysts according to the present invention need not be thermally activated before use. A thermal activation is generally considered as an expensive stage and may be a source of irreproducibility of the catalyst so omission of a thermal activation advantageously leads to a highly reproducible catalyst. However, if desired, the catalysts may be thermally activated before use in a polymerisation reaction. The thermal activation can comprise heating the supported catalyst at a temperature of preferably less than 700°C for a period of at least 5 mins, preferably 10 mins to 24 hours. Preferably, the activation is carried out at a temperature of from 100 to 350°C. Any thermal activation should be carried out in a dry, inert atmosphere, more particularly in a non-oxidizing atmosphere, free from moisture and oxygen, e.g. under nitrogen, argon or vacuum. The catalyst thus activated can have a chromium and metal M content substantially similar to that of the unactivated catalyst.

The support impregnated with Cr and the metal M, whether heat activated or not, usually contains C-metal bonds (where the metal is Cr, Ti, Zr, Hf) such as Cr-R, Cr-L, Ti R³ or Zr R³ bonds though the proportion of those C-metal bonds is lower in the case of heat activated impregnated supports. The impregnated supports contain Cr in a valency lower than 6 usually 2 or 3.

The present invention includes a process for the production of polyolefins, in particular homopolymers of ethylene and copolymers of ethylene with minor amounts of at least one C₃ to C₁₀ eg C₃ to C₈ and especially C₃ to C₅ alpha-olefin, which process comprises contacting the monomer or monomers, optionally in the presence of hydrogen, with an olefin polymerisation catalyst according to the present invention and as hereinbefore defined at a temperature and pressure sufficient to initiate the polymerisation reaction. Examples of suitable C₃ to C₈ alpha olefins are propylene, butene-1, hexene-1, 4-methyl pentene-1 and octene-1; the alpha olefin may be present with the ethylene in amounts of 0.001-80% by weight (of the total monomers). The polymers or copolymers of ethylene thus obtained can have densities, in the case of homopolymers of about 0.95 to 0.96 or 0.965 or in the case of copolymers, as low as 0.920 Kg/m³ or even lower. The C₃ to C₈ alpha-olefin content in the copolymers of ethylene can be about from 0.01% to 10% by weight or more. Preferably the monomer is ethylene and homopolymers are produced.

The supported olefin polymerisation catalysts according to the present invention may optionally be used in the presence of one or more organo metallic co-catalyst compounds having a metal belonging to the Groups I to III of the Periodic Table of the elements, the metal being selected e.g. amongst lithium, aluminium, zinc, magnesium and boron. Such co-catalysts are known for use in the polymerisation of olefins and particularly include organo-aluminium compounds, for example,
trimethylaluminium, triethylaluminium, diethylaluminium hydride, triisobutyl aluminium, tridecylaluminium, tridodecylaluminium, diethylaluminium methoxide, diethylaluminium ethoxide, diethylaluminium phenoxide, diethyl aluminium chloride, ethyl aluminium dichloride and methyl diethoxy aluminium. The co-catalyst can be deposited on the supported catalyst before, during or after the addition of the chromium complex and metal complex or can be added to the polymerisation medium along with the catalyst. Preferably the amount of co-catalyst used is up to 1000 (eg 0.1-1000)g atoms of metal per g atom of chromium in the chromium complex of the supported catalyst. More preferably the amount of co-catalyst used is less than 100 most preferably less than 10 g atoms of metal per g atom of chromium.

The olefin polymerisation catalyst according to the present invention can be used to produce polymers using solution polymerisation, slurry polymerisation or gas phase polymerisation techniques. Methods and apparatus for effecting such polymerisation reactions are well known and described in for example, Encyclopaedia of Polymer Science and Engineering published by John Wiley and Sons, 1987, Volume 7, pages 480 to 488 and 1988, Volume 12, pages 504 to 541. The catalyst according the the present invention can be used in similar amounts and under similar conditions to known olefin polymerisation catalysts such as for example the chromocene catalysts or supported chromium oxide catalysts.

The polymerisation is normally effected by contacting the monomer(s) with a catalytically effective amount of the olefin polymerisation catalyst according to the present invention, in the substantial absence of catalyst poisons, optionally in the presence of hydrogen at a temperature and pressure which are sufficient to initiate polymerisation. Hydrogen or other suitable chain transfer agents may be employed in the polymerisation to control the molecular weight of the produced polyolefin. The amount of hydrogen may be such that the percentage of the partial pressure of hydrogen to that of olefin(s) is from 0.1-200% preferably from 1-50%.

Typically, the temperature is from 30 to 110°C for the slurry or "particle form" process or for the gas phase process. For the solution process the temperature is typically from 100 to 250°C. The pressure used can be selected from a relatively wide range of suitable pressures e.g. from subatmospheric to about 350 MPa (50,000 psi). Generally, the pressure is from atmospheric up to about 6.9 MPa, preferably from 0.05-10 such as 0.14 to 5.5 MPa. In the slurry or particle form process the process is performed with a liquid inert diluent such as a saturated aliphatic hydrocarbon eg of 4-10 carbons such as isobutane or an aromatic hydrocarbon liquid such as benzene, toluene or xylene. The polymer is recovered directly from the gas phase process or by filtration or evaporation from the slurry process or evaporation from the solution process.

The polymers obtainable with the catalysts of the invention can have a Melt Index (according to ASTMD1238 Condition E, 2.16 Kg at 190°C) of 0.001-100 eg 0.005-50 and preferably 0.005-5.0 g/10 mins and a Melt Index (according to ASTM D1238 Condition F, 21.6 Kg at 190°C) of 0.1 - 300, eg 0.1-200 and preferably 0.2-40 g/10 mins. The Melt Index Ratio, (hereafter MIR) which is the ratio of the Condition F to Condition E Melt Indices, is usually up to 400, for example up to 300, especially up to 180 such as 20-300 or 40-200. The Molecular weight distribution M_{w}/Mₙ (determined as described below) is usually 8-50, preferably 10-30 and especially 15-30.

The invention is illustrated in the following Examples 1-17. All catalysts were prepared and stored under conditions which excluded oxygen (air) and water. Melt Indices were determined as described above and M_{w}/Mₙ (Molecular weight distribution) was determined as follows.

### Method for measuring the molecular weight distribution

The molecular weight distribution of a (co)polymer is calculated according to the ratio of the weight-average molecular weight, Mw, to the number-average molecular weight distribution curve obtained by means of a "WATERS" (trademark) model "150 C" gel permeation chromatograph (High Temperature Size Exclusion Chromatograph), the operating conditions being the following:
- solvent: 1,2,4-trichlorobenzene;
- solvent flow rate: 1.0 ml/minute;
- three "SHODEX" (trademark) model "AT 80 MS" columns of 25cm of length are employed;
- temperature: 145°C;
- sample concentration: 0.1% by weight;
- injection volume: 500 l;
- Universal standarisation using monodisperse polystyrene fractions.

### Example 1

### (i) Catalyst Preparation

A commercial available gamma alumina ("KETJEN grade B supplied by Akzo Chemicals BV) was dried at 150°C under vacuum and then heated at a temperature of 600°C for 3 hours in dry air and subsequently cooled to ambient temperature in dry nitrogen and stored in dry nitrogen. The alumina produced had a surface area and pore volume of approximately 360m²/g and 1.5 ml/g respectively (determined by BET porosity tests with nitrogen). The heat treated alumina (5g) was placed in a flask, under an atmosphere of dry nitrogen, and a solution of bis(cyclopentadienyl) chromium II (0.35g) dissolved in 40 ml toluene was then introduced into the flask with stirring. The slurry obtained was stirred for 30 minutes and then the supernatant liquor was decanted off with a syringe. The solid catalyst residue was washed with 2 x 40 ml toluene, with stirring of the catalyst for 5 minutes after each addition and removing the supernatant liquor by syringe. Zirconium tetrabenzyl (0.88g) was then dissolved in 40 ml of toluene and the solution obtained added to the catalyst residue. The catalyst slurry obtained was then stirred for 30 minutes after which the solvent was evaporated under vacuum at about 20°C to leave a dry free flowing powder catalyst. The catalyst contained about 2% Cr and 3.5% Zr (by weight).

### (ii) Polymerisation of Ethylene

Ethylene was homopolymerised in a 2.3 litre stainless steel reactor by contacting the monomer in the presence of hydrogen with the catalyst suspended in 1.0 litre of isobutane at 90°C under a total pressure of 600 psig (4.14 x 10⁶Nm⁻²) for approximately one hour. The hydrogen concentration and the weight of the catalyst used were as specified in Table 1, as was the activity (g polymer per g catalyst per hr). The melt index under 2.16 Kg and 21.6 Kg load, the density and the molecular weight distribution were determined; the results are shown in the Table. The polymer has a very broad bimodal molecular weight distribution with Mw/Mn of 24.5.

### Comparative Example 1a

The process of Example 1 was repeated except that the catalyst was prepared excluding the bis(cyclopentadienyl) chromium (II) addition step. This catalyst was shown to contain organic groups by the method of Temperature Programmed Decomposition Mass Spectrometry (TPDMS). The catalyst was less active and gave a polymer with lower Mw/Mn than in Example 1.

### Comparative Example 1b

The process of Example 1 was repeated except that the catalyst was prepared excluding the zirconium tetrabenzyl addition step. The catalyst was very much less active than in Ex 1 and gave a polymer with much lower Mw/Mn and Molecular weight.

### Example 2

### Catalyst Preparation

A sample of KETJEN Grade B gamma alumina of Ex 1 was calcined in air for 4 hours at 400°C and then cooled to room temperature. Sufficient solid phosphoric acid to give a P/Al ratio of 0.1 was then dissolved in methanol and added to the alumina. The volume of methanol employed corresponded to twice the pore volume of the alumina sample. After stirring the resultant slurry for 5 minutes, the excess methanol was filtered off under suction and the solid product (phosphated alumina) was dried under vacuum at 80°C for 12 hours. Samples of the dried phosphated alumina were analysed by X-ray fluorescence spectroscopy and found to contain 5.0, 5.1 wt% phosphorus and 44.4, 42.1 wt% of aluminium respectively. This product was then dried at 600°C in dry air for 3 hours, and then used to prepare a catalyst as described in Example 1.

### Polymerisation of ethylene

The catalyst was used to polymerise ethylene as in Ex 1 under conditions and with results given in Table 1. The polymer formed was in the molecular weight range used for blow moulding applications and had a broad molecular weight distribution with a high molecular weight tail and Mw/Mn of 13.1.

### Comparative Example 2a

The process of Example 2 was repeated except that the catalyst was prepared with the zirconium tetrabenzyl alone, excluding bis(cyclopentadienyl) chromium (II). The polymer formed was found to have a very high molecular weight.

### Comparative Example 2b

The process of Example 2 was repeated except that the catalyst was prepared with the bis(cyclopentadienyl) chromium (II) only, and excluding zirconium tetrabenzyl. The polymer formed was of low molecular weight and narrow molecular weight distribution.

### Example 3 and Comparative Example 3a

The processes of these examples were identical to those of Examples 2 and 2a respectively except that the polymerisations were carried out with 100 psig (6.9 x 10⁵Nm⁻²) hydrogen instead of 45 psig (3.1 x 10⁵Nm⁻²).

### Example 4

The process of Example 2 was repeated except that the phosphorus to aluminium ratio used in the phosphated alumina catalyst was 0.05. The polymer formed over this catalyst had a melt index in the range required for blow moulding applications. The polymer had a broad molecular weight distribution.

### Example 5

### Catalyst Preparation

2.5g of the phosphated alumina used for catalyst preparation in Example 2 was placed in a flask under an atmosphere of dry nitrogen. 0.28g bis(cumene) chromium and 0.44g zirconium tetrabenzyl were dissolved together in 20ml toluene and the solution obtained was then added to the support with stirring. The slurry obtained was stirred for 1 hour after which time the solvent was evaporated under vacuum to leave a powder catalyst containing about 2% Cr and 3.5% Zr (based on weight of support).

### Polymerisation of Ethylene

Ethylene was polymerised as described in Example 1 under conditions and with results given in Table 1 The polymer formed had a high load melt index of 3.2 and a melt index ratio of 160 indicative of polymer with a broad molecular weight distribution.

### Comparative Example 5a

The process of Ex 5 was repeated except that the catalyst used was prepared excluding the addition of zirconium tetrabenzyl. The polymerisation was carried out with 15 psig (10⁵Nm⁻²) hydrogen instead of 100 psig (6.9 x 10⁵ Nm⁻²) used in Example 5. The polymer formed had a melt index of 0.5 and melt index ratio of 99 showing the polymer to be of lower molecular weight and probably of narrower molecular weight distribution.

### Example 6 - Catalyst Preparation

A sample of commercially available gamma alumina ("KETJEN grade B supplied by Akzo Chemicals BV) was calcined in air for 4 hours at 400°C and then cooled to room temperature. Sufficient solid phosphoric acid to give a P/Al ratio of 0.1 was then dissolved in methanol and added to the alumina. The volume of methanol employed corresponded to twice the pore volume of the alumina sample. After stirring the resultant slurry for 5 minutes, the excess methanol was filtered off and the solid product (phosphated alumina) was dried under vacuum at 80°C for 12 hours. The phosphated alumina was then heated at 600°C for 3 hr in dry air to give a support having a surface area and pore volume of approximately 360m²/g and 1.5 ml/g respectively (determined by BET porosity tests with nitrogen). 5g of the support was placed in a flask under an atmosphere of dry nitrogen and a solution of 0.175g of bis (cyclopentadienyl) chromium II dissolved in 20 ml 40-60°C petroleum ether was then introduced into the flask with stirring. The slurry obtained was stirred for 30 minutes and then the superanatant liquor was decanted off with a syringe. The solid catalyst residue was washed with 2 x 20 ml petroleum ether, stirring the catalyst for 5 mins after each addition and removing the supernatant by syringe. 0.429g of titanium tetrabenzyl was then dissolved in 20 ml petroleum ether and the solution obtained was added to the solid residue. The slurry obtained was then stirred for 30 mins after which the solvent was evaporated under vacuum at ambient temperature to leave a dry free flowing powder catalyst. The catalyst contained about 1% Cr and 1.0% Ti (by weight) and contained organic groups as shown by Temperature Programmed Decomposition Mass Spectrometry (TPDMS).

### Examples 6 and 7

### (ii) Polymerisation of Ethylene

The homopolymerisation process of Ex 1(a) was repeated with the catalyst of Ex 1 (ii) replaced by Ex 6 (i) and with 2 hydrogen pressures. The polymer of Ex 6 had a very broad bimodal molecular weight distribution with a high molecular weight tail and Mw of 166730 and Mn of 96665.

### Examples 8 and 9

The process of Ex 6 was repeated with a catalyst with the same amount of chromium applied but with double the amount of the same Ti compound (0.858g in 40 ml petroleum ether) to give a catalyst with about 1.0% Cr and 2.0% Ti. The results are given in the Table II.

### Example 10

The process of Ex 6 was repeated with a catalyst with the same amount of chromium but with 1.3 times the amount of the same Ti compound (0.559g) in 30ml petroleum ether and heat treatment of the support before impregnation with Cr/Ti at 650°C rather than 600°C. The results are given in the Table II.

### Example 11

The process of Ex 6 was repeated with the same amounts of Cr and Ti but applied to a support, which is phosphated alumina containing a P:Al atom ratio of 0.2:1 (made by use of alumina (100g) phosphoric acid (19.22g) and methanol (237g).

### Comparative Example A

The process of Ex 7 was repeated with 0.854g of Ti tetrabenzyl in 40 ml petroleum ether but no added Cr in the catalyst production step. The conditions are otherwise given in the Table II. The polymer produced was of very high molecular weight and Melt Indices could not be measured.

### Comparative Example B

The process of Ex 7 was repeated with 0.35g of bis(cyclopentadienyl) chromium II dissolved in 40 ml petroleum ether but no added Ti in the catalyst production step. The conditions are otherwise given in the Table II, as are the results.

### Example 12

The catalyst preparation of Example 6 was repeated with the same amount of chromium compound but 0.6435g of titanium tetra benzyl in 30 ml petroleum ether. The polymerisation was performed as for Example 10. The results are shown in the Table II.

The polymer had a very broad bimodal molecular weight distribution with a high molecular weight tail and MW of 403460 and Mn of 16260.

### Example 13

The process of Example 10 was repeated with hydrogen at 45 psi rather than 100 psi. The results are shown in the Table II.

The polymers of Ex 10, 12 and 13 were also tested for environment stress crack resistance (ESCR) by melt homogenising polymer powder in a Brabender mixer at 40 rpm for 4 min at 190° and then compression moulding a plaque, which was submitted to a bent strip ESCR test. 8 plaques were made in each case and the time taken for failure of 502 of the samples was determined. In each case the samples after 360 hr showed no signs of cracking.

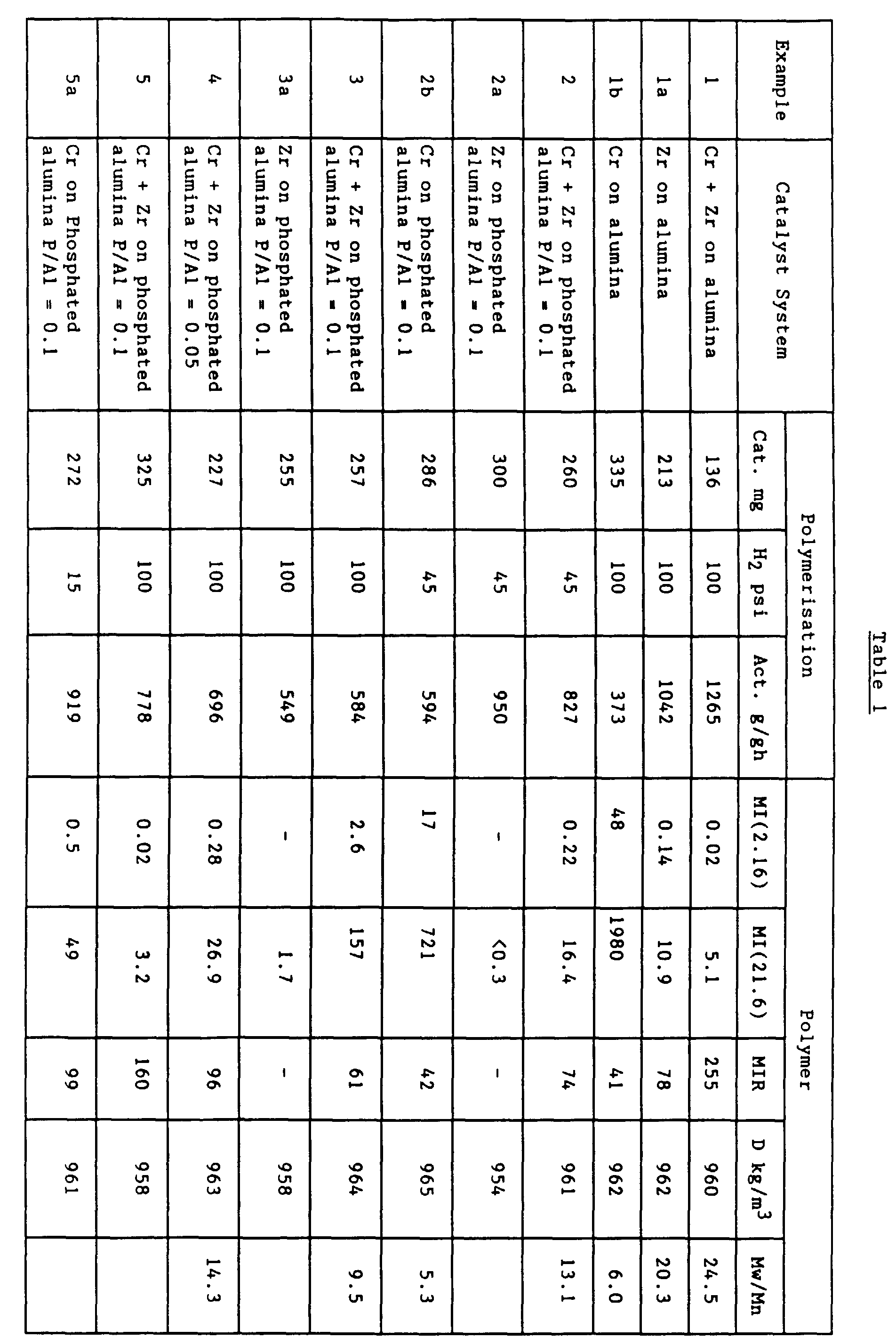

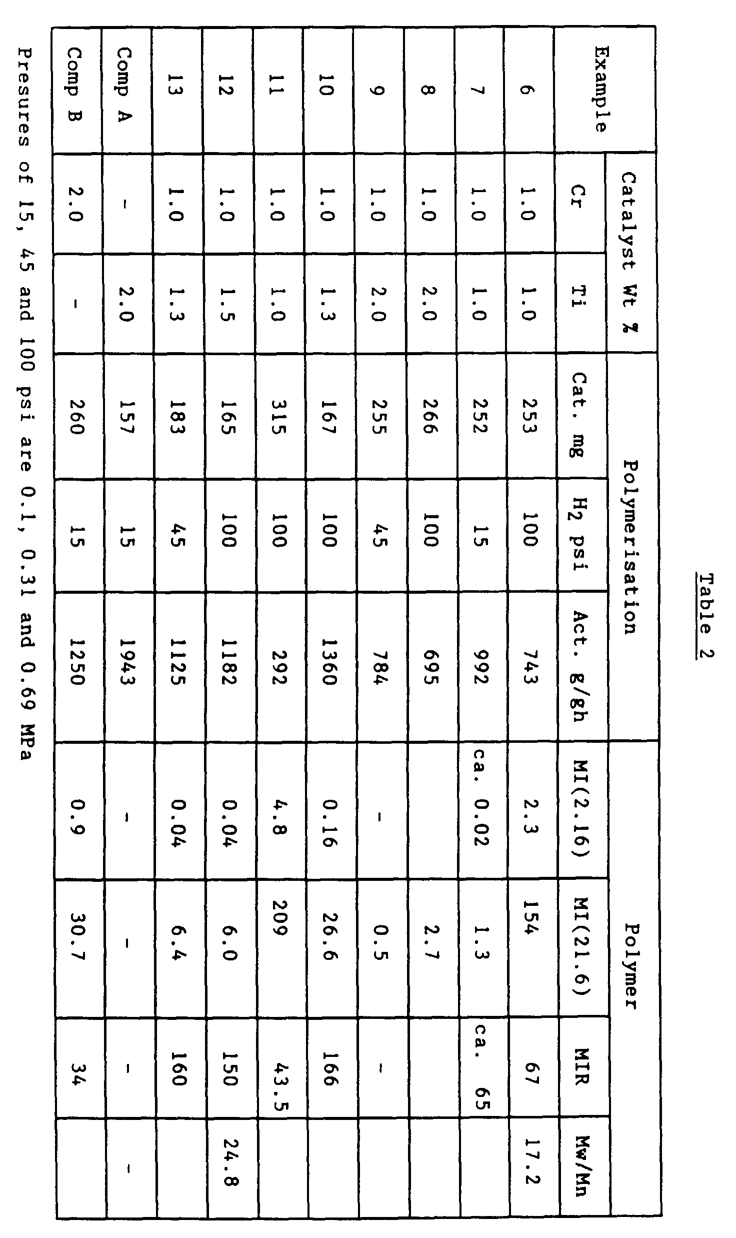

### Examples 14-17

The process of Ex 2 was repeated but with the dried phosphated alumina activated by drying at 650°C in dry air for 3 hr, and with the zirconium compound being zirconium tetraneophyl added at various levels in petroleum ether bp 40-60°C. The zirconium tetra neophyl was prepared as described in US-A-4017525 (Ex 1) by addition under anhydrous conditions under dry nitrogen of zirconium tetrachloride to a stirred solution in toluene at -10°C of 4.1 equivalents of neophyl magnesium chloride; after 1 hr stirring at -10°C the slurry obtained was warmed to 50°C and filtered under dry nitrogen to leave a filtrate which was concentrated and cooled to produce crystals of tetra neophyl zirconium, from which residual solvent was carefully removed under anhydrous conditions.

The polymerisation was performed as in Ex 2 with hydrogen at 0.69 mPa (100 psi) and with results as given in Table 3; in Ex 16, the reactor also contained hexene-1 (50 ml). The results were as follows.

**TABLE 3**

| Ex | % Zr | % Cr | Activity g/g/h | Productivity g/g | MI 2.16 | MI 21.6 | MIR | D kg/m³ |
|---|---|---|---|---|---|---|---|---|
| 14 | 1.3 | 1.0 | 2717 | 2038 | 0.60 | 30.7 | 50.3 | - |
| 15 | 1.3 | 1.0 | 2470 | 2470 | 0.48 | 31.5 | 65.6 | 958 |
| 16 | 2.3 | 1.0 | 2113 | 2113 | 0.03 | 5.7 | 177 | |
| 17 | 2.3 | 1.0 | 2884 | 2884 | - | 2.68 | >90 | 956 |

The value for the Molecular Weight Distribution Mw/Mn for Ex 15 was 12.8.

## Claims

1. An olefin polymerisation catalyst obtainable by depositing on a dry inorganic oxide support having surface hydroxyl groups, (or phosphate derivative thereof) a metal complex characterised in that said metal complex on said oxide support is
(1) at least one chromium complex either of formula
(i)
R Cr-Lₓ
wherein R is a pentadienyl or cyclopentadienyl group, each of which can be unsubstituted or substituted with 1-5 alkyl groups, each of 1-6 carbon atoms x is 1-3, and each L is a hydrocarbyl ligand which is sufficiently reactive to enable the complex to react with the inorganic support without thermal activation,
or (ii) a bis arene chromium compound; and
(2) a metal complex of formula MR³R⁴R⁵R⁶ wherein M is Ti, Zr or Hf, and each of R³, R⁴, R⁵ and R⁶ which are the same or different, represents a group of 4-20 carbon atoms of the formula (A) CH₂X(R⁷R⁸R⁹), wherein X is carbon, silicon or germanium, and each of R⁷, R⁸ and R⁹ is the same or different and represents a hydrocarbyl group or (B) CH₂Ar wherein Ar represents an aromatic group or substituted aromatic group, and, when M is Zr or Hf, each of R³, R⁴, R⁵ and R⁶, may also represent an allyl group, or said metal complex is of formula Ti R¹¹ R¹², wherein each of R¹¹ and R¹² which are the same or different, represents an acyclic dienyl group.

2. A catalyst according to claim 1 characterised in that said support is a phosphated alumina.

3. A catalyst according to claim 2 characterised in that said phosphated alumina has a P:Al ratio of 0.01-0.3:1.

4. A catalyst according to anyone of the preceding claims characterised in that R is a cyclopentadienyl group.

5. A catalyst according to any one of the preceding claims characterised in that L is a cyclopentadienyl group.

6. A catalyst according to any one of claims 1-4 characterised in that the bis arene chromium compound is of formula R¹CrR² wherein each of R¹ and R², which are the same or different, represents a benzene molecule, which may be substituted by 1-4 alkyl groups each of 1-6 carbon atoms.

7. A catalyst according to any one of the preceding claims characterised in that the weight percentage of chromium (as Cr) and metal (as M) on the support is 0.1-10%.

8. A catalyst according to any one of the preceding claims characterised in that in complex 2 each of R³, R⁴, R⁵ and R⁶ is of formula CH₂CR⁷R⁸R⁹ or CH₂Ar.

9. A catalyst according to claim 8 characterised in that complex 2 is titanium tetra benzyl.

10. A catalyst according to claim 8 characterised in that complex 2 is zirconium tetra benzyl.

11. A catalyst according to claim 8 characterised in that complex 2 is zirconium tetraneophyl.

12. A catalyst according to any one of claims 1-9 characterised in that on the support there is 0.5-5% by weight of Cr and 0.5-5% Ti.

13. A catalyst according to any one of claim 1-8, 10 and 11 characterised in that on the support there is 0.1-5% by weight of Cr and 1-8% of Zr.

14. A catalyst according to claim 12 or 13 characterised in that the metal complex I is biscyclopentadiene chromium, metal complex 2 is titanium tetra benzyl, zirconium tetrabenzyl or zirconium tetra neophyl and said support is a phosphated alumina with a P:A1 atom ratio of 0.01-0.3:1.

15. A process for making an olefin polymer catalyst according to any one of the preceding claims characterised by comprising depositing on an inorganic oxide support having surface hydroxyl group (or phosphate derivative thereof), said complexes 1 and 2.

16. A process for the production of polyolefins characterised in that at least one olefin monomer is contacted with an olefin polymerisation catalyst according to any one of claims 1-14 or made by the process of claim 15 at a temperature and pressure sufficient to initiate the polymerisation reaction.

17. A process according to claim 16 characterised in that the monomer is ethylene or a mixture thereof with an alpha olefin of 3 to 8 carbon atoms.

18. A process according to claim 16 characterised in that the monomer is ethylene.

19. A process according to any of claims 16 to 18 characterised in that it is performed in the presence of hydrogen.

## Patentansprüche

1. Katalysator zur Polymerisation von Olefin, erhältlich durch Abscheiden eines Metallkomplexes auf einem trokkenen Träger aus anorganischem Oxid, der auf seiner Oberfläche Hydroxylgruppen aufweist, (oder einem Phosphatderivat davon), dadurch gekennzeichnet, daß der Metallkomplex auf dem Oxidträger (1) mindestens ein Chromkomplex entweder der Formel (i)
R Cr-Lₓ,
worin R eine Pentadienyl- oder Cyclopentadienylgruppe bedeutet, wobei jede davon unsubstituiert oder mit 1-5 Alkylgruppen, jeweils mit 1-6 Kohlenstoffatomen, substituiert sein kann, x 1-3 ist und jeder Rest L einen Kohlenwasserstoffliganden bedeutet, der ausreichend reaktiv ist, damit der Komplex mit dem anorganischen Träger ohne thermische Aktivierung reagieren kann, oder (ii) eine Bisarenchromverbindung und (2) ein Metallkomplex der Formel MR³R⁴R⁵R⁶ ist, worin M Ti, Zr oder Hf bedeutet und jeder der Reste R³, R⁴, R⁵ und R⁶, die gleich oder verschieden sind, eine Gruppe mit 4-20 Kohlenstoffatomen der Formel (A) CH₂X(R⁷R⁸R⁹) bedeutet, worin X Kohlenstoff, Silicium oder Germanium bedeutet und jeder der Reste R⁷, R⁸ und R⁹, gleich oder verschieden ist, und eine Kohlenwasserstoffgruppe wiedergibt oder (B) CH₂Ar, worin Ar eine aromatische Gruppe oder eine substituierte aromatische Gruppe bedeutet und, wenn M Zr oder Hf ist, jeder der Reste R³, R⁴, R⁵ und R⁶ ebenfalls eine Allylgruppe wiedergeben kann oder der Metallkomplex die Formel Ti R¹¹R¹² aufweist, worin R¹¹ und R¹², die gleich oder verschieden sind, jeweils eine acyclische Dienylgruppe wiedergeben.

2. Katalysator nach Anspruch 1, dadurch gekennzeichnet, daß der Träger ein phosphatiertes Aluminiumoxid ist.

3. Katalysator nach Anspruch 2, dadurch gekennzeichnet, daß das phosphatierte Aluminiumoxid ein P:Al-Verhältnis von 0,01-0,3:1 aufweist.

4. Katalysator nach einem der vorangehenden Ansprüche, dadurch gekennzeichnet, daß R eine Cyclopentadienylgruppe ist.

5. Katalysator nach einem der vorangehenden Ansprüche, dadurch gekennzeichnet, daß L eine Cyclopentadienylgruppe ist.

6. Katalysator nach einem der Ansprüche 1-4, dadurch gekennzeichnet, daß die Bisarenchrom-Verbindung die Formel R¹CrR² aufweist, worin jeder der Reste R¹ und R², die gleich oder verschieden sind, ein Benzolmolekül darstellt, das mit 1-4 Alkylgruppen mit jeweils 1-6 Kohlenstoffatomen substituiert sein kann.

7. Katalysator nach einem der vorangehenden Ansprüche, dadurch gekennzeichnet, daß Chrom (als Cr) und Metall (als M) auf dem Träger 0,1-10 Gew.-% betragen.

8. Katalysator nach einem der vorangehenden Ansprüche, dadurch gekennzeichnet, daß in Komplex 2 R³, R⁴, R⁵ und R⁶ jeweils die Formel CH₂CR⁷R⁸R⁹ oder CH₂Ar aufweisen.

9. Katalysator nach Anspruch 8, dadurch gekennzeichnet, daß Komplex 2 Titantetrabenzyl ist.

10. Katalysator nach Anspruch 8, dadurch gekennzeichnet, daß Komplex 2 Zirconiumtetrabenzyl ist.

11. Katalysator nach Anspruch 8, dadurch gekennzeichnet, daß Komplex 2 Zirconiumtetraneophyl ist.

12. Katalysator nach einem Ansprüche 1-9, dadurch gekennzeichnet, daß auf dem Träger 0,5-5 Gewichtsprozent Cr und 0,5-5% Ti vorliegen.

13. Katalysator nach einem der Ansprüche 1-8, 10 und 11, dadurch gekennzeichnet, daß auf dem Träger 0,1-5 Gewichtsprozent Cr und 1-8% Zr vorliegen.

14. Katalysator nach Anspruch 12 oder 13, dadurch gekennzeichnet, daß der Metallkomplex 1 Biscyclopentadienchrom ist, Metallkomplex 2 Titantetrabenzyl, Zirconiumtetrabenzyl oder Zirconiumtetraneophyl ist und der Träger ein phosphatiertes Aluminiumoxid ist mit einem P:Al-Verhältnis von 0,01-0,3:1.

15. Verfahren zur Herstellung eines Olefin-Polymer-Katalysators nach einem der vorangehenden Ansprüche, dadurch gekennzeichnet, daß es Abscheiden der Komplexe 1 und 2 auf einem Träger aus anorganischem Oxid mit Hydroxylgruppen auf der Oberfläche (oder einem Phosphatderivat davon) umfaßt.

16. Verfahren zur Herstellung von Polyolefinen, dadurch gekennzeichnet, daß mindestens ein Olefinmonomer mit einem Olefin-Polymerisations-Katalysator nach einem der Ansprüche 1-14 oder hergestellt durch das Verfahren von Anspruch 15, bei einer Temperatur und einem Druck, ausreichend, um die Polymerisationsreaktion zu starten, in Kontakt gebracht wird.

17. Verfahren nach Anspruch 16, dadurch gekennzeichnet, daß das Monomer Ethylen oder ein Gemisch davon mit einem α-Olefin, das 3 bis 8 Kohlenstoffatome aufweist, ist.

18. Verfahren nach Anspruch 16, dadurch gekennzeichnet, daß das Monomer Ethylen ist.

19. Verfahren nach einem der Ansprüche 16 bis 18, dadurch gekennzeichnet, daß es in Gegenwart von Wasserstoff ausgeführt wird.

## Revendications

1. Catalyseur de polymérisation d'oléfines susceptible d'être obtenu par dépôt, sur un support d'oxyde minéral sec ayant des groupes hydroxyle en surface (ou ses dérivés phosphate), d'un complexe métallique, caractérisé en ce que ledit complexe métallique sur ledit support d'oxyde est :
(1) au moins un complexe de chrome de formule :
(i)
R-Cr-Lₓ
où R est un groupe pentadiényle ou cyclopentadiényle, éventuellement substitué par 1 à 5 groupes alkyle ayant de 1 à 6 atomes de carbone, x est 1-3, et chaque L est un ligand hydrocarbyle qui est suffisamment réactif pour permettre au complexe de réagir avec le support minéral sans activation thermique, ou
(ii) un composé bis-arène-chrome ; et
(2) un complexe métallique de formule MR³R⁴R⁵R⁶, dans laquelle M est Ti, Zr ou Hf, et R³, R⁴, R⁵ et R⁶, qui sont identiques ou différents, représentent chacun un groupe comportant 4 à 20 atomes de carbone de formule (A) CH₂X(R⁷R⁸R⁹) dans laquelle X est le carbone, le silicium ou le germanium, et R⁷, R⁸ et R⁹ sont identiques ou différents et représentent chacun un groupe hydrocarbyle, ou (B) CH₂Ar dans laquelle Ar représente un groupe aromatique ou un groupe aromatique substitué, et, lorsque M est Zr ou Hf, R³, R⁴, R⁵ et R⁶, qui sont identiques ou différents, peuvent aussi représenter chacun un groupe allyle, ou encore ledit complexe métallique a pour formule TiR¹¹R¹² dans laquelle R¹¹ et R¹², qui sont identiques ou différents, représentent chacun un groupe diényle acyclique.

2. Catalyseur selon la revendication 1, caractérisé en ce que ledit support est de l'alumine phosphatée.

3. Catalyseur selon la revendication 2, caractérisé en ce que ladite alumine phosphatée a un rapport P/Al compris entre 0,01 et 0,3/1.

4. Catalyseur selon l'une des revendications précédentes, caractérisé en ce que R est un groupe cyclopentadiényle.

5. Catalyseur selon l'une des revendications précédentes, caractérisé en ce que L est un groupe cyclopentadiényle.

6. Catalyseur selon l'une des revendications 1 à 4, caractérisé en ce que le composé bis-arène-chrome a pour formule R¹CrR² dans laquelle R¹ et R², qui sont identiques ou différents, représentent chacun une molécule de benzène qui peut être substituée par 1 à 4 groupes alkyle ayant chacun de 1 à 6 atomes de carbone.

7. Catalyseur selon l'une des revendications précédentes, caractérisé en ce que le pourcentage en poids de chrome (sous forme Cr) et de métal (sous forme M) sur le support est compris entre 0,1 et 10 %.

8. Catalyseur selon l'une des revendications précédentes, caractérisé en ce que, dans le complexe 2, chacun de R³, R⁴, R⁵ et R⁶ a pour formule CH²CR⁷R⁸R⁹ ou CH₂Ar.

9. Catalyseur selon la revendication 8, caractérisé en ce que le complexe 2 est le tétrabenzyl-titane.

10. Catalyseur selon la revendication 8, caractérisé en ce que le complexe 2 est le tétrabenzyl-zirconium.

11. Catalyseur selon la revendication 8, caractérisé en ce que le complexe 2 est le tétranéophyl-zirconium.

12. Catalyseur selon l'une des revendications 1 à 9, caractérisé en ce que, sur le support, sont présents 0,5 à 5 % en poids de Cr et 0,5 à 5 % de Ti.

13. Catalyseur selon l'une des revendications 1 à 8, 10 et 11, caractérisé en ce que, sur le support, sont présents 0,1 à 5 % en poids de Cr et 1 à 8 % de Zr.

14. Catalyseur selon l'une des revendications 12 ou 13, caractérisé en ce que le complexe métallique I est le biscyclopentadiène-chrome, le complexe métallique 2 est le tétrabenzyl-titane, le tétrabenzyl-zirconium ou le tétranéophyl-zirconium, et ledit support est une alumine phosphatée avec un rapport atomique P/Al compris entre 0,01 et 0,3/1.

15. Procédé de fabrication d'un catalyseur de polymérisation d'oléfines selon l'une des revendications précédentes, caractérisé en ce qu'il comprend le dépôt, sur un support d'oxyde minéral ayant un groupe hydroxyle en surface (ou son dérivé phosphate), desdits complexes 1 et 2.

16. Procédé pour la production de polyoléfines, caractérisé en ce qu'au moins un monomère d'oléfine est mis en contact avec un catalyseur de polymérisation d'oléfines selon l'une des revendications 1 à 14 ou obtenu par le procédé de la revendication 15, à une température et sous une pression suffisantes pour amorcer la réaction de polymérisation.

17. Procédé selon la revendication 16, caractérisé en ce que le monomère est l'éthylène ou un mélange de celui-ci avec une α-oléfine ayant de 3 à 8 atomes de carbone.

18. Procédé selon la revendication 16, caractérisé en ce que le monomère est l'éthylène.

19. Procédé selon l'une des revendications 16 à 18, caractérisé en ce qu'il est effectué en présence d'hydrogène.
